# EUROPEAN PATENT APPLICATION

(11) **EP 4 283 220 A1**
(43) Date of publication of application: **29.11.2023**
(21) Application number: 22742024.7
(22) Date of filing: 07.01.2022
(51) Int. Cl.: F25B 39/00, F25B 43/00, F28F 9/00, F28F 9/26

(54) **GAS COLLECTING PIPE ASSEMBLY**

(30) Priority: 21.01.2021 CN 202120170856 U
(71) Applicant: Zhejiang Dunan Artificial Environment Co., Ltd., Shaoxing Zhejiang 311835 (CN)
(72) Inventor: WANG, Wenjie, Shaoxing, Zhejiang 311835 (CN); LIU, Haibo, Shaoxing, Zhejiang 311835 (CN); FANG, Yi, Shaoxing, Zhejiang 311835 (CN)
(74) Representative: Petraz, Gilberto Luigi
(86) International application number: PCT/CN2022/070640
(87) International publication number: WO 2022/156545

(57) **Abstract**

A gas collecting pipe assembly is provided, including a main pipe (10) and branch pipes (20). The branch pipes (20) are fixed onto the main pipe (10) and in communication with an interior of the main pipe (10). The gas collecting pipe assembly further includes sleeves (30). Mounting holes (11) are formed on outer sidewall of the main pipe (10). A first end of each sleeve (30) is fixed inside the corresponding mounting hole (11), and a second end of each sleeve (30) is located outside the main pipe (10). One end of each branch pipe (20) is inserted into the corresponding sleeve (30) from the second end of the sleeve (30) away from the main pipe (10), and is connected to the sleeve (30) by welding.

## Description

### CROSS-REFERENCE TO RELATED APPLICATIONS

This application claims priority to Chinese patent application No. 202120170856.9, filed on January 21, 2021, and titled "GAS COLLECTING PIPE ASSEMBLY". The content of the above identified application is hereby incorporated herein in their entireties by reference.

### TECHNICAL FIELD

The present disclosure relates to the field of refrigeration, and in particular, to a gas collecting pipe assembly.

### BACKGROUND

In refrigerant pipelines of air conditioning systems, gas collecting pipe assemblies are commonly used to distribute a flow of refrigerant. These gas collecting pipe assemblies are mostly connected to inlet and outlet ports of condensers and evaporators.

Conventional gas collecting pipe assemblies typically involve direct brazing of the main pipe and branch pipes in a furnace. This limited brazing space and resulted in low hardness of the branch pipes after direct brazing in the furnace, making them susceptible to deformation during transportation.

### SUMMARY

In view of the above technical problems, the present application provides a gas collecting pipe assembly that has high hardness and is less prone to deformation.

To solve the above-mentioned technical problems, the present application provides the following technical solution.

A gas collecting pipe assembly is provided, which includes a main pipe and at least one branch pipe. The at least one branch pipe is fixed to the main pipe and in communication with an interior of the main pipe. The gas collecting pipe assembly further includes at least one sleeve. An outer sidewall of the main pipe is provided with at least one mounting hole. A first end of the at least one sleeve is fixed inside the at least one mounting hole, and a second end of the at least one sleeve is located outside the main pipe. One end of the at least one branch pipe is inserted into an interior of the at least one sleeve from the second end of the at least one sleeve away from the main pipe and is connected to the at least one sleeve by a welding process.

It should be understood that by providing the sleeve between the main pipe and the branch pipes, the present application solves the problem of low hardness of the branch pipes caused by direct welding between the main pipe and the branch pipes, as well as the susceptibility to deformation during transportation.

In some embodiments, the at least one sleeve includes a necking section and a flaring section, the necking section is connected to the main pipe, and the flaring section is connected to the at least one branch pipe.

It should be understood that this enhances the reliability of the welding between the main pipe and the branch pipes.

In some embodiments, the at least one sleeve further includes a limiting section, the limiting section is located between the necking section and the flaring section, and an outer diameter of the limiting section is greater than a diameter of the mounting hole.

It should be understood that the limiting section can prevent excessive insertion of the sleeve into the main pipe, providing proper positioning and ensuring sufficient contact between a welding material and a weld seam, thereby preventing leaks.

In some embodiments, the main pipe is provided with a convex part, the mounting hole is located at the convex part, and the necking section is connected with the convex part.

It should be understood that this facilitates a welding between the main pipe and the sleeves.

In some embodiments, the convex portion and the main pipe are an integral structure.

In some embodiments, the necking section and the main pipe are welded by furnace brazing.

It should be understood that this not only improves welding efficiency but also reduces costs.

In some embodiments, the flaring section and the at least one branch pipe are welded by flame welding.

It should be understood that this simplifies the process and makes it easier to master the operation technique.

In some embodiments, a diameter of the main pipe is defined as D, a depth of the at least one sleeve inserted into the main pipe through the mounting hole along an axial direction of the mounting hole is defined as H, and the diameter D of the main pipe and the depth H of the at least one sleeve inserted into the main pipe satisfy the following formula: H ≤ 0.5* D.

It should be understood that it will prevent these phenomena that if the sleeves are inserted too deep into the main pipe, it would increase costs and cause blockages; and conversely, if the sleeves are inserted too shallowly, the welding between the sleeves and the main pipe may become blackened.

In some embodiments, the main pipe is made of stainless steel.

In some embodiments, the at least one sleeve and the at least one branch pipe are made of copper.

Compared to the related art, the gas collecting pipe assembly provided by the present application solves the problem of low hardness of the branch pipes and susceptibility to deformation during transportation caused by direct welding between the main pipe and the branch pipes by providing the sleeves between them.

### BRIEF DESCRIPTION OF THE DRAWINGS

FIG. 1 is a schematic structural diagram of a gas collecting pipe assembly in the present application.
FIG. 2 is a partial enlarged view of A part in FIG. 1.

The symbols in the figure are defined as follows.

100 represents a gas collecting pipe assembly; 10 represents a main pipe; 11 represents a mounting hole; 12 represents a convex part; 13 represents a connecting section; 131 represents a copper sleeve; 20 represents a branch pipe; 30 represents a sleeve; 31 represents a necking section; 32 represents a flaring section; and 33 represents a limiting section.

### DETAILED DESCRIPTION

The technical solutions in the embodiments of this application will be clearly and completely described below with reference to the accompanying drawings in the embodiments of this application. All other embodiments obtained by a person of ordinary skill in the art based on the embodiments of the present application without creative efforts shall fall within the protection scope of the present application.

It should be noted that when the component is referred to as being "mounted to" another component, it may be directly on the other component or may also be intervening components. When one component is considered to be "disposed on" another component, it may be directly disposed on another component or there may be a centering component simultaneously. When one component is considered to be "fixed to" another component, it may be directly fixed on another component or there may be a centering component at the same time.

Unless otherwise defined, all technical and scientific terms used herein have the same meaning as commonly understood by one skilled in the art to which this application belongs. The terminology used herein in the specification of the present application is for the purpose of describing particular embodiments only and is not intended to be limiting of the present application. As used herein, the terms "or/and" include any and all combinations of one or more of the associated listed items.

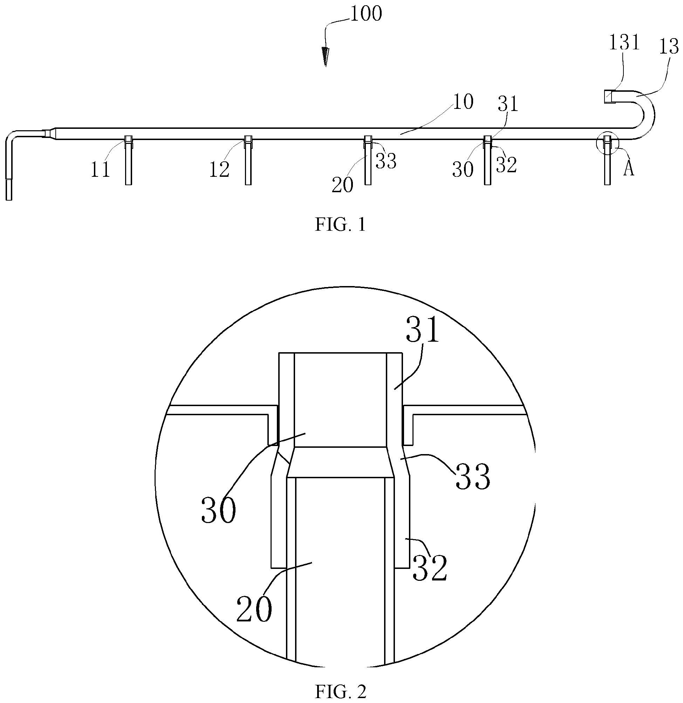

Referring to FIGs. 1 and 2, the present application provides a gas collecting pipe assembly 100, which can be applied in a refrigerant pipeline of an air conditioning system and is typically connected to inlet and outlet ports of a condenser or an evaporator. It is commonly used to distribute a flow of refrigerant.

Specifically, the gas collecting pipe assembly 100 includes a main pipe 10 and at least one branch pipe 20 or a plurality of branch pipes 20. The branch pipes 20 are fixed to the main pipe 10 and are in communication with an interior of the main pipe 10. The gas collecting pipe assembly 100 further includes at least one sleeve 30 or a plurality of sleeves 30. An outer wall of the main pipes 10 is provided with at least one mounting hole 11 or a plurality of mounting holes 11. A first end of the sleeves 30 is fixed inside the mounting holes 11, and a second end of the sleeves 30 is located outside the main pipes 10. One end of the branch pipes 20 is inserted into an interior of the sleeve 30 from the second end of the sleeves 30 away from the main pipe 10 and is welded to the sleeves 30.

It should be noted that in conventional gas collecting pipe assemblies, branch pipes are directly brazed to the main pipe, resulting in limited welding space and low hardness of the branch pipes, which are prone to deformation during transportation. However, in this embodiment, by providing the sleeve 30 between the main pipe 10 and the branch pipes 20, the problems of low hardness and deformation caused by direct brazing between the main pipe and the branch pipes can be solved.

In this embodiment, the main pipe 10 is made of SUS304 stainless steel. And optionally, in other embodiments, the main pipe 10 may be made of carbon steel or aluminum, which is not limited herein.

In this embodiment, the branch pipes 20 are made of TP2Y copper. And optionally, in other embodiments, other types of materials may be used for the branch pipes 20, which is not limited herein.

In this embodiment, the main pipe 10 is provided with a plurality of mounting holes 11, each corresponding to installation of one of the branch pipes 20.

As shown in FIG. 1, the main pipe 10 is provided with a plurality of convex parts 12, and the mounting holes 11 are located at the convex parts 12. The convex parts 12 are integrally formed with the main pipe 10, i.e. the convex parts 12 and the main pipe 10 are an integral structure.

It should be noted that the convex parts 12 can be formed by stamping the main pipe 10 from the inside to the outside, which facilitates welding between the main pipe 10 and the sleeves 30.

Specifically, a connecting section 13 is provided at one end of the main pipe 10 along its axial direction. The connecting section 13 is connected to pipeline components of a refrigeration system. The plurality of branch pipes 20 are provided on a side of the main pipe 10, and the plurality of branch pipes 20 are configured to connect with heat exchangers of the refrigeration system.

Furthermore, an end of the connecting section 13 is connected to a copper sleeve 131. Since the main pipe 10 and the connecting section 13 are both made of stainless steel, the copper sleeve 131 is provided to facilitate connection between the connecting section 13 and the pipeline components of the refrigeration system made of copper.

Specifically, the main pipe 10 can be a straight pipe structure, and the connecting section 13 can be a bent pipe section with an approximate bending angle of 180°. This arrangement allows the connecting section 13 to be approximately parallel to the main pipe 10, making it easier to install the gas collecting pipe assembly 100 in parallel with pipeline components of the refrigeration system, reducing assembly space and achieving a more compact structure, thus improving space utilization.

As shown in FIG. 2, the sleeve 30 includes a necking section 31 and a flaring section 32. The necking section 31 is connected to the main pipe 10, and the flaring section 32 is connected to the branch pipes 20. And this design enhances welding reliability between the main pipe 10 and the branch pipes 20.

In this embodiment, the sleeve 30 is made of copper. Optionally, in other embodiments, the sleeve 30 may be made of other materials, which is not limited herein.

It should be understood that due to a higher coefficient of thermal expansion and contraction of copper compared to that of stainless steel, when the necking section 31 of the sleeve 30 is welded to the main pipe 10, expansion amplitude of the sleeve 30 is greater than that of the main pipe 10. This results in a more secure and reliable welding between the two.

In this embodiment, the necking section 31 and the main pipe 10 are welded by furnace brazing. This not only improves the efficiency of the welding process but also reduces costs. Optionally, in other embodiments, alternative welding methods can be used for connecting of the necking section 31 and the main pipe 10, which is not limited herein.

In this embodiment, the flaring section 32 and the branch pipe 20 are welded by flame welding. This simplifies the process and makes the operation technique easier to master. Optionally, in other embodiments, alternative welding methods can be used for connecting of the flaring section 32 and the branch pipe 20, which is not limited herein.

Furthermore, the sleeve 30 also includes a limiting section 33 between the necking section 31 and the flaring section 32. An outer diameter of the limiting section 33 is greater than a diameter of the mounting hole 11. The limiting section 33 prevents the sleeve 30 from excessively extending into the main pipe 10, providing positioning and ensuring sufficient contact between the welding material and the weld seam to prevent leakage.

Additionally, the diameter of the main pipe 10 is defined as D, and a depth of the sleeve 30 inserted into the main pipe 10 through the mounting hole 11 along an axial direction of the mounting hole 11is defined as H. The relationship between the diameter D of the main pipe 10 and the depth H of the sleeve 30 inserted into the main pipe 10 satisfies the following formula: H ≤ 0.5* D. It will prevent these phenomena that if the sleeve 30 is inserted too deeply into the main pipe 10, it may increase costs and cause blockage; and if the sleeve 30 is inserted too shallowly, the welding between the sleeves 30 and the main pipe 10 may become blackened.

In this embodiment, the plurality of branch pipes 20 and the plurality of sleeves 30 are formed by stamping, and the stamping process is ensured by molds. Therefore, the consistency and precision of the plurality of branch pipes 20 and the plurality of sleeves 30 are guaranteed.

The manufacturing process of the gas collecting pipe assembly 100 in this embodiment includes the following steps:

Step 1 of preparing the main pipe 10, including cutting a suitable length of stainless steel pipe, chamfering the stainless steel pipe, and then using a swaging machine to swage both ends of the stainless steel pipe; using a drawing machine to form the mounting hole 11 for welding the sleeve 30 on a side wall of the stainless steel pipe; then, using a bending machine to bend the connecting section 13 of the main pipe 10, and finally cleaning and drying the pipe; step 2 of preparing the branch pipe 20, including cutting a suitable length of copper pipe and chamfering the copper pipe; finally, cleaning and drying the pipe; step 3 of preparing the sleeve 30, including cutting a suitable length of a copper pipe and chamfering the copper pipe; then, using an expanding machine to expand one end of the copper pipe for welding the branch pipe 20 as required, matching a diameter of the flaring section of the copper pipe with the branch pipe 20; then, using a swaging machine to swage the other end of the copper pipe for welding the main pipe 10 as required, making a diameter of a necking section of the copper pipe slightly smaller than a diameter of the mounting hole 11 on the side wall of the main pipe 10; finally, cleaning and drying the pipe; step 4 of assembling, including inserting the necking section 31 of the sleeve 30 into the mounting hole 11 on the side wall of the main pipe 10, installing a solid annular bronze solder into the branch pipe 20; step 5 of welding, including using a welding furnace to weld the assembled sleeve 30 and the main pipe 10, wherein the temperature of the welding furnace is controlled at 930°C, and the speed of the sleeve 30 and the main pipe 10 passing through the welding furnace is 0.3 meters per minute; step 6 of inserting the branch pipe 20 into the flaring section 32 of the sleeve 30 to fix the branch pipe 20 and the main pipe 10 by welding, wherein the welding methods can include flame welding, laser welding, or argon arc welding; step 7 of leak testing, including inspecting the welded gas collecting pipe assembly 100 for any welding defects.

By providing the sleeve 30 between the main pipe 10 and the branch pipe 20 in the welding process of the gas collecting pipe assembly 100, the problems of reduced hardness of the branch pipe 20 and deformation during transportation caused by furnace welding between the main pipe 10 and the branch pipe 20 are solved.

All the technical features of the above embodiments may be combined arbitrarily, so that the description is concise, and all possible combinations of the technical features in the above embodiments are not described, however, as long as there is no contradiction in the combination of these technical features, it should be considered that the scope of the present specification is set forth..

The above embodiments only express several embodiments of the present application, and the description thereof is more specific and detailed, but cannot be understood as a limitation on the application patent scope. It should be noted that, for a person of ordinary skill in the art, several variations and improvements may be made without departing from the concept of the present application, all of which fall within the protection scope of the present application. Therefore, the scope of protection of this application shall be subject to the appended claims.

## Claims

1. A gas collecting pipe assembly, comprising a main pipe and at least one branch pipe, wherein the at least one branch pipe is fixed to the main pipe and in communication with an interior of the main pipe, **characterized in that**,
the gas collecting pipe assembly further comprises at least one sleeve, an outer sidewall of the main pipe is provided with at least one mounting hole, a first end of the at least one sleeve is fixed inside the at least one mounting hole, and a second end of the at least one sleeve is located outside the main pipe, one end of the at least one branch pipe is inserted into an interior of the at least one sleeve from the second end of the at least one sleeve away from the main pipe and is connected to the at least one sleeve by a welding process.

2. The gas collecting pipe assembly of claim 1, wherein the at least one sleeve comprises a necking section and a flaring section, the necking section is connected to the main pipe, and the flaring section is connected to the at least one branch pipe.

3. The gas collecting pipe assembly of claim 2, wherein the at least one sleeve further comprises a limiting section, the limiting section is located between the necking section and the flaring section, and an outer diameter of the limiting section is greater than a diameter of the mounting hole.

4. The gas collecting pipe assembly of claim 2, wherein the main pipe is provided with a convex part, the mounting hole is located at the convex part, and the necking section is connected with the convex part.

5. The gas collecting pipe assembly of claim 4, wherein the convex portion and the main pipe are an integral structure.

6. The gas collecting pipe assembly of claim 2, wherein the necking section and the main pipe are welded by furnace brazing.

7. The gas collecting pipe assembly of claim 2, wherein the flaring section and the at least one branch pipe are welded by flame welding.

8. The gas collecting pipe assembly of claim 4, wherein a diameter of the main pipe is defined as D, a depth of the at least one sleeve inserted into the main pipe through the mounting hole along an axial direction of the mounting hole is defined as H, and the diameter D of the main pipe and the depth H of the at least one sleeve inserted into the main pipe satisfy the following formula: H ≤ 0.5* D.

9. The gas collecting pipe assembly of claim 1, wherein the main pipe is made of stainless steel.

10. The gas collecting pipe assembly of claim 9, wherein the at least one sleeve and the at least one branch pipe are made of copper.
